(19) Europäisches Patentamt
European Patent Office
Office européen des brevets

(11) **EP 1 196 913 B1**

(12) **EUROPEAN PATENT SPECIFICATION**

(45) Date of publication and mention
of the grant of the patent:
**21.02.2007 Bulletin 2007/08**

(51) Int Cl.:
*H04N 7/26* (2006.01)    *H04N 1/32* (2006.01)
*G06T 1/00* (2006.01)

(21) Application number: **00927889.6**

(22) Date of filing: **16.05.2000**

(86) International application number:
**PCT/KR2000/000476**

(87) International publication number:
**WO 2000/070605 (23.11.2000 Gazette 2000/47)**

(54) **DIGITAL IMAGE WATERMARKING METHOD**

VERFAHREN FÜR EIN WASSERZEICHEN EINES DIGITALEN BILDES

PROCEDE DE FACONNAGE EN FILIGRANE D'UNE IMAGE NUMERIQUE

(84) Designated Contracting States:
**AT BE CH CY DE DK ES FI FR GB GR IE IT LI LU MC NL PT SE**

(30) Priority: **17.05.1999 US 134549 P**

(43) Date of publication of application:
**17.04.2002 Bulletin 2002/16**

(73) Proprietor: **SAMSUNG ELECTRONICS CO., LTD.**
**Suwon-si,**
**Gyeonggi-do 442-742 (KR)**

(72) Inventor: **SHIN, Hyun Doo,**
**510-1302 Mujigae Maeul Cheonggu Ap**
**Sungnam-city,**
**Kyungki-do 463-500 (KR)**

(74) Representative: **Geary, Stuart Lloyd et al**
**Venner Shipley LLP**
**20 Little Britain**
**London EC1A 7DH (GB)**

(56) References cited:
EP-A- 0 891 071          JP-A- 11 065 440
JP-A- 11 065 444          JP-A- 11 239 129
JP-A- 11 341 268

• CHAE J J ET AL: "COLOR IMAGE EMBEDDING USING MULTIDIMENSIONAL LATTICE STRUCTURES" PROCEEDINGS OF THE 1998 INTERNATIONAL CONFERENCE ON IMAGE PROCESSING. ICIP '98. CHICAGO, IL, OCT. 4 - 7, 1998, INTERNATIONAL CONFERENCE ON IMAGE PROCESSING, LOS ALAMITOS, CA: IEEE COMPUTER SOC, US, vol. 1 CONF. 5, October 1998 (1998-10), pages 460-464, XP000668956 ISBN: 0-8186-8822-X
• CHAE J J ET AL: "A robust data hiding technique using multidimensional lattices" RESEARCH AND TECHNOLOGY ADVANCES IN DIGITAL LIBRARIES, 1998. ADL 98. PROCEEDINGS. IEEE INTERNATIONAL FORUM ON SANTA BARBARA, CA, USA 22-24 APRIL 1998, LOS ALAMITOS, CA, USA,IEEE COMPUT. SOC, US, 22 April 1998 (1998-04-22), pages 319-326, XP010276910 ISBN: 0-8186-8464-X
• INOUE H ET AL: "A DIGITAL WATERMARK BASED ON THE WAVELET TRANSFORM AND ITS ROBUSTNESS ON IMAGE COMPRESSION" PROCEEDINGS OF THE 1998 INTERNATIONAL CONFERENCE ON IMAGE PROCESSING. ICIP '98. CHICAGO, IL, OCT. 4 - 7, 1998, INTERNATIONAL CONFERENCE ON IMAGE PROCESSING, LOS ALAMITOS, CA: IEEE COMPUTER SOC, US, vol. 2 CONF. 5, October 1998 (1998-10), pages 391-395, XP000669436 ISBN: 0-8186-8822-X

**(Cont. next page)**

- **HOUNG-JYH WANG ET AL: "Image protection via watermarking on perceptually significant wavelet coefficients" MULTIMEDIA SIGNAL PROCESSING, 1998 IEEE SECOND WORKSHOP ON REDONDO BEACH, CA, USA 7-9 DEC. 1998, PISCATAWAY, NJ, USA,IEEE, US, 7 December 1998 (1998-12-07), pages 279-284, XP010318337 ISBN: 0-7803-4919-9**
- **JONG RYUL KIM ET AL: "A robust wavelet-based digital watermarking using level-adaptive thresholding" IMAGE PROCESSING, 1999. ICIP 99. PROCEEDINGS. 1999 INTERNATIONAL CONFERENCE ON KOBE, JAPAN 24-28 OCT. 1999, PISCATAWAY, NJ, USA,IEEE, US, 24 October 1999 (1999-10-24), pages 226-230, XP010369108 ISBN: 0-7803-5467-2**

## Description

The present invention relates to a digital image watermarking method comprising the steps of obtaining a wavelet coefficient set, at a first predetermined level, from a data set representing the signature image and obtaining a scaling coefficient set, at said first predetermined level, as said wavelet coefficient set, from data representing the host image, and to a digital image watermarking processor comprising means for obtaining a wavelet coefficient set, at a first predetermined level, from a data set representing the signature image and means for obtaining a scaling coefficient set, at said first predetermined level, as said wavelet coefficient set, from data representing the host image.

Digital watermarking is a technique of embedding a bit pattern, which is referred to as signature information, in a digital image or audio and video files to identify the image or files as copyright information. That is to say, digital watermarking can be used for the purpose of providing copyright protection. In the case where copyright material is based on video contents, the digital watermarking is devised such that the signature information is invisible. In the case where copyright material is based on audio contents, the digital watermarking is devised such that the signature information is inaudible. Also, the signature information must be evenly spread throughout an original file so as not to be identified or manipulated by users. Further, the signature information must be robust enough to withstand general changes made to the original file, for example, reduction due to a compression algorithm.

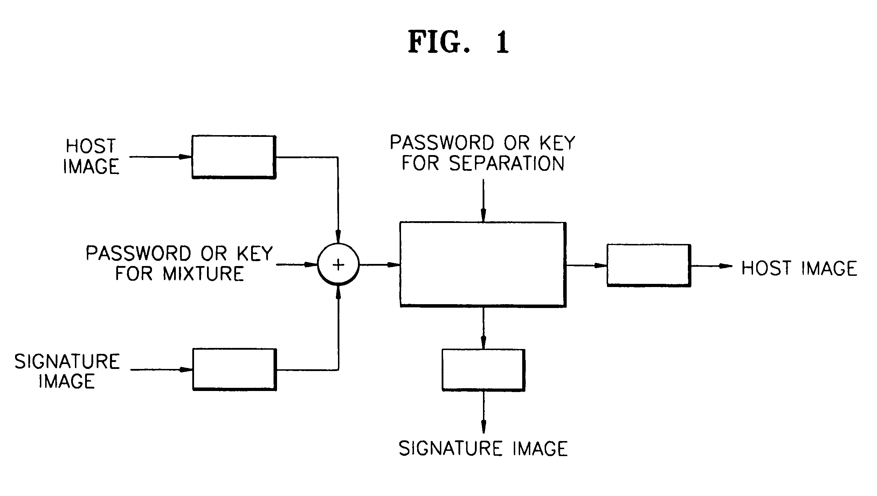

FIG. 1 illustrates a conventional digital image watermarking method. Referring to FIG. 1, in the conventional digital image watermarking method, a host image and a signature image are transformed into Fourier coefficients by fast fourier transform (FFT), and not only coefficients of the transformed signature image but also a password or key for mixing are attached to a high frequency portion of a coefficient spatial domain of the transformed host image, thereby performing watermarking. Now, the watermarked image is separated into host image coefficients and signature image coefficients using a password or key for separation. Next, the separated coefficients are inverse fast fourier transformed (IFFT), thereby obtaining a host image and a signature image, respectively.

Also, according to another conventional digital watermarking method, a signature image and a host image are transformed into wavelet coefficients by discrete wavelet transform (DWT), and the wavelet coefficients of the signature image are attached to a wavelet spatial domain of the transformed host image, thereby performing watermarking.

However, according to the conventional watermarking methods, since the arrangement of signature image coefficients embedded in the host image coefficients is based on the arithmetic sum of two coefficients at each pixel point, the arrangement robustness cannot be ensured. That is to say, if a combined image undergoes severe image processing for altering the image, e.g., image compression, the arithmetic sum may be changed so severely that one type of data cannot be separated from another type of data. Similarly, if a combined image undergoes mild image processing two or more times, the arithmetic sum may also be changed so severely that one type of data cannot be separated from another type of data.

Further background information can be obtained from Chae, J.J. et al, "Color Image Embedding Using Multidimentional Lattice Structures", ICIP '98, IEEE Computer Soc., US, vol 1 CONF, 5 October 1998, pp 460-464 and Chae J.J et al, "A Robust Data Hiding Technique Using Multidimensional Lattices", ADL '98, IEEE Computer Soc., US, 22 April 1998, pp 319-326.

A watermarking method, according to the present invention, is characterized by applying a predetermined wavelet reconstruction algorithm to said wavelet and scaling coefficient sets to produce a new scaling coefficient set at a second predetermined level, which is the next level above the first predetermined level, the contributions of the wavelet coefficient set and the scaling coefficient set being linearly independent, and generating a watermarked image from said new scaling coefficient set and generating a key from the other coefficient sets, at said first predetermined level, which are not used to generate said new scaling coefficient set.

According to the present invention, there is also provided a digital image encoding method comprising the digital image watermarking method according to the present invention.

According to the present invention, there is provided a computer-readable recording medium storing program codes for controlling a computer to perform a method according to the present invention.

A method of decoding an image watermarked by an encoding method according to the present invention, the method comprising the step of extracting a signature image from the watermarked image using the key.

A digital image watermarking processor, according to the present invention, is characterised by means for applying a predetermined wavelet reconstruction algorithm to said wavelet and scaling coefficient sets to produce a new scaling coefficient set at a second predetermined level, which is the next level above the first predetermined level, such that signature and host image data are linearly independently combined, and means for generating a watermarked image from said new scaling coefficient set and generating a key from the other coefficient sets, at said first predetermined level, which are not used to generate said new scaling coefficient set.

According to the present invention, there is provided a digital image encoding apparatus comprising the digital image watermarking processor according to the present invention.

An apparatus for decoding an image encoded by a method according to the present invention, the apparatus comprising means for extracting a signature image from the watermarked image using the key.

An embodiment of the present invention will now be described, by way of example, with reference to the accompanying drawings, in which:-

FIG. 1 is a diagram illustrating a conventional digital image watermarking method;
FIG. 2 is a flow diagram illustrating the major steps of a digital image watermarking method according to the present invention; and
FIG. 3 is a block diagram of a digital image watermarking processor according to the present invention.

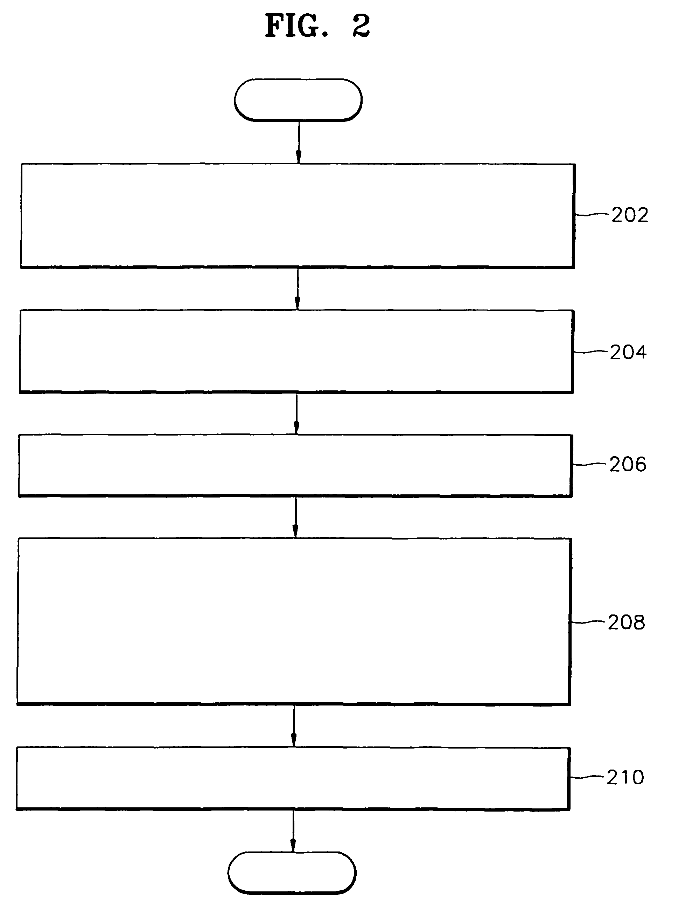

FIG. 2 is a flow diagram illustrating the major steps of a digital image watermarking method according to the present invention. A host image and a signature image each consists of a plurality of pixels. Since pixel values correspond to examples of predetermined values for color vectors of the respective pixels representing the image, the pixel values of the host image can be generalized to be referred to as a host image data set. Now, pixel values for a host image and a signature image will be referred to as a host image data set and a signature image data set, respectively.

According to the digital image watermarking method of the present invention, first, the respective data of signature image data sets are padded with zeros as pixel values, thereby making the size of a signature image data set the same as that of a host image data set (step 202).

For example, when $n$, $l$ and $m$ are independently predetermined positive integers, it is assumed that a host image consists of $n$ pixels. Also, assuming that $l$ represents the number of pixels of an image of the same direction, i.e.. either horizontal or vertical, the amount of data in the host image data set, that is, the number of pixels of a host image, $n$, equals $2^l$. Also, when a signature image consists of $m$ pixels, it is assumed that $m$ equals $0.25 \times n$.

Next, the padded signature image data sets are set as wavelet coefficient sets of wavelet functions at a level $l$ (step 204). Also, the host image data sets are set as scaling coefficient sets of scaling functions at a level $l$ (step 206).

Now, by using a wavelet reconstruction algorithm in which coefficients of the wavelet coefficient sets and coefficients of the scaling coefficient sets are alternately arranged, the wavelet coefficient sets and the scaling coefficient sets are reconstructed as scaling coefficient sets at one level higher than the level $l$ to which these two sets belong, that is, at a level $l+l$ (step 208). The number of resultant coefficients equals $2^{l-1}$. Also, the wavelet coefficient sets and the scaling coefficient sets included in the scaling coefficient sets reconstructed by the wavelet reconstruction algorithm are linearly independent.

Then, a watermarked image and a key are generated from the reconstructed scaling coefficient sets (step 210). Preferably, $2^l$ coefficients are selected among $2^{l-1}$ coefficients and used as pixel values of the watermarked image. The remaining coefficients are considered as the key, together with the types of the wavelet functions used. For example, the coefficients alternately selected based on the alternate arrangement according to the reconstruction algorithm in step 208 can be used as watermarked images and the remaining coefficients can be used as keys.

For better understanding of the present invention, the watermarking method according to the present invention will now be described in more detail in the case of adopting the watermarking method in a Haar system having a simple scheme of reconstruction and decomposition for scaling and wavelet functions.

When k is a number between 1 and $2^l$ and $j$ is a number representing a level, the scaling coefficients of scaling functions can be represented by $\{s_k^j\}$ and the wavelet coefficients of wavelet functions can be represented by $\{d_k^j\}$, as in steps 202 through 206.

The reconstruction algorithm of step 208 can be represented by the following scheme (1).

$$\{s_k^j\} \oplus \{d_k^j\} = \{s_k^{j+1}\} \qquad \ldots(1)$$

In the Haar system, $\{s_k^j\}$ is decomposed into $\{s_k^{j-1}\}$ and $\{d_k^{j-1}\}$, in accordance with a predetermined decomposition algorithm, for example.

In the Haar system, the above scheme is arithmetically represented by the following equations (2) and (3).

$$s_k^{j-1} = \frac{1}{\sqrt{2}}(s_{2k-1}^j + s_{2k}^j) \qquad \ldots(2)$$

$$d_k^{j-1} = \frac{1}{\sqrt{2}}(s_{2k-1}^j - s_{2k}^j) \qquad \ldots(3)$$

Also, using the equations (2) and (3), the reconstruction algorithm can be represented by the following equations (4) and (5).

$$s_{2k-1}^j = \frac{1}{\sqrt{2}}(s_{2k}^{j-1} + d_k^{j-1}) \qquad \ldots(4)$$

$$s_{2k}^j = \frac{1}{\sqrt{2}}(s_{2k}^{j-1} - d_k^{j-1}) \qquad \ldots(5)$$

According to the above-described reconstruction algorithm, for example, $\{s_{2k-1}^j\}$ is set as a watermarked image and $\{s_{2k}^j\}$ is set as a key. Also, when a host image is $\{s_k^l\}$ and a signature image is $\{d_k^l\}$, the reconstructed image can be represented by $\{s_k^{l+1}\}$, the watermarked image can be represented by $\{s_{2k-1}^{l+1}\}$ and the key can be represented by $\{s_{2k}^{l+1}\}$.

Now, it is possible to extract a signature image from the watermarked image using the key, which is appreciated by one skilled in the watermarking art.

As described above, according to the watermarking method of the present invention, host image data sets and signature image data sets are combined using a wavelet reconstruction algorithm so as to satisfy a linearly independent relationship therebetween. Thus, since an embedded signature image is orthogonal to the image combined therewith, perturbations of the combined image act on equally both the combined image components and the embedded signature image components, that is, two orthogonal components. As a result, the degrees of distortion of the embedded signature image and the image combined therewith are similar to each other due to the linear independence of two images.

Therefore, according to the watermarking image of the present invention, a signature image embedded in an image combined therewith are similar to each other in view of existence and durability. Also, like in the case where a signature image is not attached, it is easy to restore the host image.

The above-described digital image watermarking method can be adopted in a digital image encoding method.

Also, an image encoded by a digital image encoding method comprising the step of performing a digital image watermarking method for combining host image data sets and signature image data sets in a predetermined combination method by which the host image data sets and the signature image data sets are linearly independently combined, and for generating a watermarked image and a key from the combined image, can be decoded by a digital image decoding method for extracting a signature image from the watermarked image.

Further, the digital image watermarking method and the digital image encoding method can be writeable by a program implemented by a PC or server computer. The program codes and code segments constituting the program can be easily inferred by computer programmers in the art. Also, the program can be stored on a computer-readable recording medium. Examples of the recording medium include a magnetic recording medium, a magneto-optical recording medium and a multimedia recording medium.

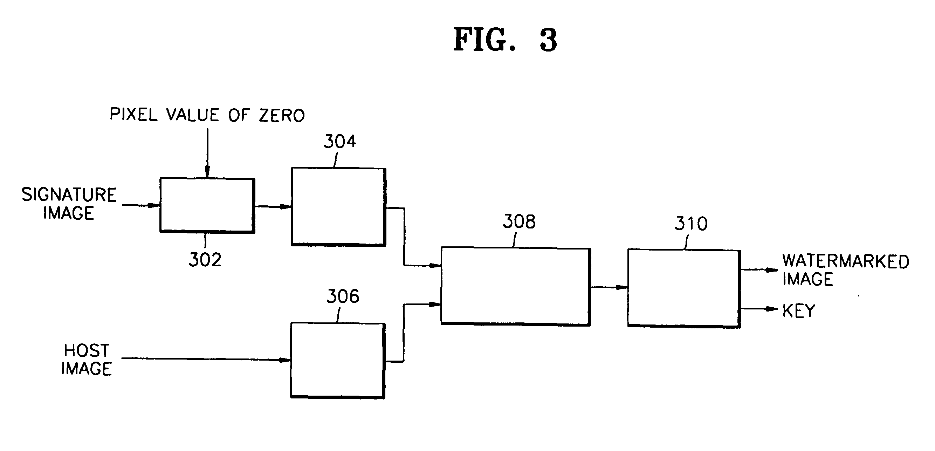

Also, the above-described digital image watermarking method can be implemented by a digital image watermarking processor. FIG. 3 is a block diagram of a digital image watermarking processor according to the present invention. Referring to FIG. 3, the digital image watermarking processor according to the present invention includes a padding portion 302, a first setting portion 304, a second setting portion 306, a reconstructing portion 308 and an image/key generating portion 310. The digital image watermarking processor is designed based on the digital image watermarking method shown in FIG. 2.

The digital image watermarking processor operates as follows. The padding portion 302 pads with zeros as pixel values between the respective data in the signature image data set such that the size of a signature image data set is the same as that of a host image data set. The first setting portion 304 sets the padded signature image data sets as wavelet coefficient sets of wavelet functions. The second setting portion 306 sets the host image data sets as scaling coefficient sets of scaling functions. The reconstructing portion 308 reconstructs the wavelet coefficient sets and the scaling coefficient sets as scaling coefficient sets at one level higher than the level to which the two sets belong, in accordance with a predetermined wavelet reconstruction algorithm in which the wavelet coefficient sets and the scaling coefficient sets are linearly independently arranged. Then, the image/key generating portion 310 generates a watermarked image and a key from the reconstructed scaling coefficient sets output from the reconstructing portion 308.

The above-described digital image watermarking processor may be included in the digital image encoding apparatus.

Also, the above-described digital image decoding method may be implemented by a digital image decoding apparatus. The digital image decoding apparatus (not shown) includes a decoder for decoding the image encoded by the digital image encoding method comprising the step of performing a digital image watermarking method for combining host image data sets and signature image data sets in a predetermined combination method by which the host image data sets and the signature image data sets are linearly independently combined, and for generating a watermarked image and a key from the combined image. The decoder extracts a signature image from the watermarked image using the key. Extraction of a signature image from the watermarked image using the key can be appreciated by one skilled in the watermarking art. Since the signature image is similar to the combined image in view of existence and durability, based on the characteristics of the watermarking method applied to encoding, the signature image can be separated from the combined image in a more stable manner.

While an alternate arrangement of wavelet coefficient sets and scaling coefficient sets there has been described and illustrated, it should be clear to those skilled in the art that variations and modifications are possible without departing from the scope of the invention as defined in the appended claims.

As described above, according to the present invention, a signature image embedded in a combined image is similar to the combined image in view of existence and durability.

Industrial Applicability

Digital watermarking can be used for the purpose of providing copyright protection of materials based on digital formats.

**Claims**

1. A digital image watermarking method comprising the steps of:

   obtaining a wavelet coefficient set, at a first predetermined level, from a data set representing the signature image; and
   obtaining a scaling coefficient set, at said first predetermined level, as said wavelet coefficient set, from data representing the host image;
   **characterised by:**

   applying a predetermined wavelet reconstruction algorithm to said wavelet and scaling coefficient sets to produce a new scaling coefficient set at a second predetermined level, which is the next level above the first predetermined level, such that signature and host image data are linearly independently combined; and generating a watermarked image from said new scaling coefficient set and generating a key from the other coefficient sets, at said first predetermined level, which are not used to generate said new scaling coefficient set.

2. A digital image watermarking method according to claim 1, comprising padding the data set representing the signature image by interposing predetermined pixel values so that it is the same size as the data set representing the host image.

3. A digital image watermarking method according to claim 2, wherein the predetermined pixel values are zeros.

4. A digital image watermarking method according to claim 2 or 3, wherein the predetermined wavelet reconstruction algorithm comprises the step of alternately arranging coefficients of said signature image wavelet coefficient set and coefficients of said host image scaling coefficient sets.

5. A digital image encoding method comprising the digital image watermarking method according to any preceding claim.

6. A computer-readable recording medium storing program codes for controlling a computer to perform a method according to any preceding claim.

7. A method of decoding an image encoded by a method according to claim 5, the method comprising the step of extracting a signature image from the watermarked image using the key.

8. A digital image watermarking processor comprising:

   means for obtaining a wavelet coefficient set, at a first predetermined level, from a data set representing the signature image; and
   means for obtaining a scaling coefficient set, at said first predetermined level, as said wavelet coefficient set, from data representing the host image;
   **characterised by**:

   means for applying a predetermined wavelet reconstruction algorithm to said wavelet and scaling coefficient sets to produce a new scaling coefficient set at a second predetermined level, which is the next level above the first predetermined level, such that signature and host image data are linearly independently combined; and
   means for generating a watermarked image from said new scaling coefficient set and generating a key from the other coefficient sets, at said first predetermined level, which are not used to generate said new scaling coefficient set.

9. A digital image watermarking processor according to claim 8, including means for padding the data set representing the signature image by interposing predetermined pixel values so that it is the same size as the data set representing the host image.

10. A digital image watermarking processor according to claim 9, wherein the predetermined pixel values are zeros.

11. A digital image watermarking processor according to claim 8, 9 or 10, wherein the predetermined wavelet reconstruction algorithm comprises the step of alternately arranging coefficients of the wavelet coefficient sets and coefficients of the scaling coefficient sets.

12. A digital image encoding apparatus comprising the digital image watermarking processor according to any one of claims 8 to 11.

13. An apparatus for decoding an image encoded by a method according to claim 5, the apparatus composing means for extracting a signature image from the watermarked image using the key.

**Patentansprüche**

1. Verfahren für ein Wasserzeichen eines digitalen Bildes, das Verfahren umfasst die folgenden Schritte:

   Erhalten eines Wavelet-Koeffizientensatzes auf einer ersten vorgegebenen Stufe aus einem Datensatz, der das Signaturbild darstellt, und
   Erhalten eines Skalierungskoeffizienten auf der ersten vorgegebenen Stufe als den Wavelet-Koeffizientensatz aus Daten, die das Hostbild darstellen,
   und ist **gekennzeichnet durch**:

Anwenden eines vorgegebenen Wavelet-Rekonstruktionsalgorithmus auf die Wavelet- und Skalierungskoeffizientensätze, um einen neuen Skalierungskoeffizientensatz auf einer zweiten vorgegebenen Stufe zu erzeugen, welche die nächste Stufe über der ersten vorgegebenen Stufe ist, so dass die Signatur- und Hostbilddaten linear unabhängig kombiniert werden, und

Erzeugen eines mit Wasserzeichen versehenen Bildes aus dem neuen Skalierungskoeffizientensatz und Generieren eines Schlüssels aus den anderen Koeffizientensätzen auf der ersten vorgegebenen Stufe, die nicht verwendet werden, um den neuen Skalierungskoeffizientensatz zu generieren.

2. Verfahren für ein Wasserzeichen eines digitalen Bildes nach Anspruch 1, das das Füllen des Datensatzes, der das Signaturbild darstellt, durch Einfügen von vorgegebenen Pixelwerten, so dass er von derselben Größe wie der Datensatz ist, der das Hostbild darstellt, umfasst.

3. Verfahren für ein Wasserzeichen eines digitalen Bildes nach Anspruch 2, wobei die vorgegebenen Pixelwerte Nullen sind.

4. Verfahren für ein Wasserzeichen eines digitalen Bildes nach Anspruch 2 oder 3, wobei der vorgegebene Wavelet-Rekonstruktionsalgorithmus den Schritt des alternierenden Anordnens von Koeffizienten des Signaturbild-Wavelet-Koeffizientensatzes und von Koeffizienten der Hostbild-Skalierungskoeffizientensätze umfasst.

5. Kodierverfahren für ein digitales Bild, das das Verfahren für ein Wasserzeichen eines digitalen Bildes nach einem der vorhergehenden Ansprüche umfasst.

6. Computerlesbares Aufzeichnungsmedium, das Programmcodes zum Steuern eines Computers, um ein Verfahren nach einem der vorhergehenden Ansprüche durchzuführen, umfasst.

7. Verfahren zum Dekodieren eines durch ein Verfahren nach Anspruch 5 kodierten Bildes, wobei das Verfahren den Schritt des Extrahierens eines Signaturbildes aus dem mit Wasserzeichen versehenen Bild unter Verwendung des Schlüssels umfasst.

8. Prozessor für ein Wasserzeichen eines digitalen Bildes, der umfasst:

Mittel zum Erhalten eines Wavelet-Koeffizientensatzes auf einer ersten vorgegebenen Stufe aus einem Datensatz, der das Signaturbild darstellt, und

Mittel zum Erhalten eines Skalierungskoeffizienten auf der ersten vorgegebenen Stufe als Wavelet-Koeffizientensatz aus Daten, die das Hostbild darstellen,

und **gekennzeichnet ist durch**:

Mittel zum Anwenden eines vorgegebenen Wavelet-Rekonstruktionsalgorithmus auf die Wavelet- und Skalierungskoeffizientensätze, um einen neuen Skalierungskoeffizientensatz auf einer zweiten vorgegebenen Stufe zu erzeugen, welche die nächste Stufe über der ersten vorgegebenen Stufe ist, so dass die Signatur- und Hostbilddaten linear unabhängig kombiniert werden, und

Mittel zum Erzeugen eines mit Wasserzeichen versehenen Bildes aus dem neuen Skalierungskoeffizientensatz und Generieren eines Schlüssels aus den anderen Koeffizientensätzen auf der ersten vorgegebenen Stufe, die nicht verwendet werden, um den neuen Skalierungskoeffizientensatz zu generieren.

9. Prozessor für ein Wasserzeichen eines digitalen Bildes nach Anspruch 8, der Mittel zum Füllen des Datensatzes, der das Signaturbild darstellt, durch Einfügen von vorgegebenen Pixelwerten, so dass er von derselben Größe wie der Datensatz ist, der das Hostbild darstellt, umfasst.

10. Prozessor für ein Wasserzeichen eines digitalen Bildes nach Anspruch 9, wobei die vorgegebenen Pixelwerte Nullen sind.

11. Prozessor für ein Wasserzeichen eines digitalen Bildes nach Anspruch 8, 9 oder 10, wobei der vorgegebene Wavelet-Rekonstruktionsalgorithmus den Schritt des alternierenden Anordnens von Koeffizienten der Wavelet-Koeffizientensätze und von Koeffizienten der Skalierungskoeffizientensätze umfasst.

12. Kodiervorrichtung für ein digitales Bild, die den Prozessor für ein Wasserzeichen eines digitalen Bildes nach einem der Ansprüche 8 bis 11 umfasst.

**13.** Vorrichtung zum Dekodieren eines Bildes, das durch ein Verfahren nach Anspruch 5 kodiert ist, wobei die Vorrichtung Mittel zum Extrahieren eines Signaturbildes aus dem mit Wasserzeichen versehenen Bild unter Verwendung des Schlüssels umfasst.

**Revendications**

**1.** Procédé de filigranage d'image numérique comportant les étapes consistant à :

obtenir un ensemble de coefficients d'ondelet-tes, à un premier niveau prédéterminé, à partir d'un ensemble de données représentant l'image de signature, et
obtenir un ensemble de coefficients d'échelle, audit premier niveau prédéterminé, en tant que ledit ensemble de coefficients d'ondelettes, à partir de données représentant l'image hôte,
**caractérisé par** les étapes consistant à :

appliquer un algorithme de reconstitution d'ondelettes prédéterminé auxdits ensembles de coefficients d'ondelettes et d'échelle pour produire un nouvel ensemble de coefficients d'échelle à un second niveau prédéterminé, qui est le niveau suivant au-dessus du premier niveau prédéterminé, de sorte que des données d'image de signature et d'image hôte sont linéairement indépendamment combinées, et
générer une image filigranée à partir dudit nouvel ensemble de coefficients d'échelle et générer une clé à partir des autres ensembles de coefficients, audit premier niveau prédéterminé, qui ne sont pas utilisés pour générer ledit nouvel ensemble de coefficients d'échelle.

**2.** Procédé de filigranage d'image numérique selon la revendication 1, comportant le remplissage de l'ensemble de données représentant l'image de signature en interposant des valeurs de pixels prédéterminées de telle sorte qu'il ait la même taille que l'ensemble de données représentant l'image hôte.

**3.** Procédé de filigranage d'image numérique selon la revendication 2, dans lequel les valeurs de pixels prédéterminées sont des zéros.

**4.** Procédé de filigranage d'image numérique selon la revendication 2 ou 3, dans lequel l'algorithme de reconstitution d'ondelettes prédéterminé comporte l'étape d'agencement de manière alternée de coefficients dudit ensemble de coefficients d'ondelettes d'image de signature et de coefficients desdits ensembles de coefficients d'échelle d'image hôte.

**5.** Procédé de codage d'image numérique comportant le procédé de filigranage d'image numérique selon l'une quelconque des revendications précédentes.

**6.** Support d'enregistrement lisible par ordinateur mémorisant des codes de programme pour ordonner à un ordinateur d'exécuter un procédé selon l'une quelconque des revendications précédentes.

**7.** Procédé de décodage d'une image codée par un procédé selon la revendication 5, le procédé comportant l'étape d'extraction d'une image de signature à partir de l'image filigranée en utilisant la clé.

**8.** Processeur de filigranage d'image numérique comportant :

des moyens pour obtenir un ensemble de coefficients d'ondelettes, à un premier niveau prédéterminé, à partir d'un ensemble de données représentant l'image de signature, et
des moyens pour obtenir un ensemble de coefficients d'échelle, audit premier niveau prédéterminé, en tant que ledit ensemble de coefficients d'ondelettes, à partir de données représentant l'image hôte,
**caractérisé par** :

des moyens pour appliquer un algorithme de reconstitution d'ondelettes prédéterminé auxdits ensembles de coefficients d'ondelettes et d'échelle pour produire un nouvel ensemble de coefficients d'échelle à un second niveau prédéterminé, qui est le niveau suivant au-dessus du premier niveau prédéterminé, de sorte que des données d'image de signature et d'image hôte sont linéairement indépendamment combinées, et
des moyens pour générer une image filigranée à partir dudit nouvel ensemble de coefficients d'échelle et générer une clé à partir des autres ensembles de coefficients, audit premier niveau prédéterminé, qui ne sont pas utilisés pour générer ledit nouvel ensemble de coefficients d'échelle.

9. Processeur de filigranage d'image numérique selon la revendication 8, incluant des moyens pour remplir l'ensemble de données représentant l'image de signature en interposant des valeurs de pixels prédéterminées de manière à ce qu'il ait la même taille que l'ensemble de données représentant l'image hôte.

10. Processeur de filigranage d'image numérique selon la revendication 9, dans lequel les valeurs de pixels prédéterminées sont des zéros.

11. Processeur de filigranage d'image numérique selon la revendication 8, 9 ou 10, dans lequel l'algorithme de reconstitution d'ondelettes prédéterminé comporte l'étape d'agencement de manière alternée de coefficients des ensembles de coefficients d'ondelettes et de coefficients des ensembles de coefficients d'échelle.

12. Dispositif de codage d'image numérique comportant le processeur de filigranage d'image numérique selon l'une quelconque des revendications 8 à 11.

13. Dispositif pour décoder une image codée par un procédé selon la revendication 5, le dispositif comportant des moyens pour extraire une image de signature à partir de l'image filigranée en utilisant la clé.

# FIG. 1

HOST IMAGE

PASSWORD OR KEY
FOR SEPARATION

PASSWORD OR KEY
FOR MIXTURE

$+$

HOST IMAGE

SIGNATURE
IMAGE

SIGNATURE IMAGE

# FIG. 2

```
      ┌─────────────┐
      │             │
      └─────────────┘
             │
             ▼
┌───────────────────────────┐
│                           │────202
│                           │
└───────────────────────────┘
             │
             ▼
┌───────────────────────────┐
│                           │────204
└───────────────────────────┘
             │
             ▼
┌───────────────────────────┐
│                           │────206
└───────────────────────────┘
             │
             ▼
┌───────────────────────────┐
│                           │
│                           │────208
│                           │
└───────────────────────────┘
             │
             ▼
┌───────────────────────────┐
│                           │────210
└───────────────────────────┘
             │
             ▼
      ┌─────────────┐
      │             │
      └─────────────┘
```

EP 1 196 913 B1

# FIG. 3

PIXEL VALUE OF ZERO

SIGNATURE
IMAGE

302

304

306

HOST
IMAGE

308

310

WATERMARKED
IMAGE

KEY